# EUROPÄISCHE PATENTSCHRIFT

(11) **EP 2 479 462 B1**
(45) Veröffentlichungstag und Bekanntmachung des Hinweises auf die Patenterteilung: **14.10.2015**
(21) Anmeldenummer: 12000159.9
(22) Anmeldetag: 12.01.2012
(51) Int. Cl.: F16K 1/02

(54) **Frostsichere Auslaufarmatur**
Frost-proof drain fitting
Armature sanitaire antigel

(30) Priorität: 21.01.2011 DE 202011001782 U
(43) Veröffentlichungstag der Anmeldung: 25.07.2012
(73) Patentinhaber: Gebr. Kemper GmbH + Co. KG Metallwerke, 57462 Olpe (DE)
(72) Erfinder: Blumenthal, Roland, Dr., 50374 Erftstadt (DE); Hilchenbach, Gerd, 57462 Olpe (DE)
(74) Vertreter: Grünecker Patent- und Rechtsanwälte PartG mbB

(56) Entgegenhaltungen:
- WO-A1-2004/094879
- DE-C1- 10 110 585
- DE-U1- 20 219 008

## Beschreibung

Die vorliegende Erfindung betrifft eine frostsichere Auslaufarmatur, wie sie beispielsweise aus der DE 10 2008 009 081 A1 bzw. EP 1 122 476, dem DE 200 01 883 U1, der DE 101 10 585 C1 oder aber der DE 298 20 782 U1 bekannt ist.

Die erfindungsgemäße frostsichere Auslaufarmatur hat ein Ventilgehäuse, welches einen Ventilsitz ausbildet und üblicherweise von einem Befestigungskranz zur verdrehfesten Montage des Ventilgehäuses umgeben ist. Dieses Ventilgehäuse befindet sich üblicherweise im Gebäudeinneren, jedenfalls mit erheblichem Abstand zu der Gebäudeaußenwand mit dem Ziel, dass die Temperatur im Bereich des Ventilsitzes zu keiner Zeit den Gefrierpunkt des Wassers erreicht. Die frostsichere Auslaufarmatur hat des Weiteren ein Auslaufgehäuse, welches in der Regel mit einer Auslauftülle und einem Belüfter versehen ist und in dem ein Ventiloberteil mit einer Handhabe und einer axial beweglichen Stellspindel montiert ist. Dieses Auslaufgehäuse wird bei der gattungsgemäßen frostsicheren Auslaufarmatur an der Gebäudeaußenwand montiert. Zur Überbrückung des Abstandes zwischen dem Auslaufgehäuse und dem Ventilgehäuse ist ein Zwischenrohr vorgesehen, welches einen das Ventilgehäuse mit dem Auslaufgehäuse verbindenden Strömungskanal ausformt. Des Weiteren hat die gattungsgemäße Auslaufarmatur eine Zwischenspindel, die mit der Stellspindel verbunden ist und an ihrem einlaufseitigen Ende einen Ventilkegel trägt, welcher mit dem Ventilsitz zusammenwirkt, um die Auslaufarmatur abzusperren. Die axiale Länge der Zwischenspindel und des Zwischenrohres können dabei erheblich sein, um die gewünschte thermische Isolation zwischen dem Ventilgehäuse und dem Auslaufgehäuse zu erreichen.

Die Auslaufarmatur ist üblicherweise so ausgebildet, dass beim Absperren der Auslaufarmatur durch Anlage des Ventilkörpers gegen den Ventilsitz der Belüfter zwangsgeführt, oder aufgrund einer Druckdifferenz aktiviert wird, so dass ein Ringraum zwischen der Zwischenspindel und dem Zwischenrohr entleert wird. Mit anderen Worten wird der gesamte Bereich zwischen dem Ventilsitz und einer Auslauftülle der Auslaufarmatur entleert. Dabei besteht das Problem, dass mitunter an einer Auslauftülle des Auslaufgehäuses unter Frostbedingungen noch ein Schlauch oder dergleichen angeschlossen ist, der selber unter Druck steht. Folglich kann das Stromab des Ventilkörpers in der Auslaufarmatur befindliche Wasser nicht abfließen. Es besteht die Gefahr eines Einfrierens der Armatur und der Frostschäden.

Im Hinblick darauf sind zwar in der Vergangenheit Maßnahmen vorgeschlagen worden, wie eine sichere Entleerung der Auslaufarmatur unter sämtlichen Betriebsbedingungen gewährleistet werden kann. Diese lassen aber gleichwohl Bedienungsfehler zu oder führen zu einer Kosten treibenden Konstruktion. Der vorliegenden Erfindung liegt die Aufgabe zugrunde, eine Auslaufarmatur anzugeben, die weniger anfällig gegen Frostschäden bei unsachgemäßer Handhabung ist. Des Weiteren will die vorliegende Erfindung eine frostsichere Auslaufarmatur angeben, die sich kostengünstig und einfach herstellen lässt.

Zur Lösung dieser Aufgabenstellung gibt die vorliegende Erfindung eine frostsichere Auslaufarmatur mit den Merkmalen von Anspruch 1 an. Diese unterscheiden sich dadurch von dem gattungsgemäßen Stand der Technik, dass die Zwischenspindel aus Kunststoff gebildet sind. Die Verwendung von Kunststoff für das Zwischenrohr führt bereits durch die Werkstoffwahl zu einer verbesserten Isolation in Längsrichtung der frostsicheren Auslaufarmatur. Die durch das Zwischenrohr bzw. die Zwischenspindel gebildete Wärmebrücke hat dem entsprechend eine schlechtere Wärmeleitfähigkeit als bei den aus dem Stand der Technik bekannten Auslaufarmaturen, weil die Zwischenspindel und/oder das Zwischenrohr aus Metall gefertigt sind, welches eine bessere Wärmeleitfähigkeit als Kunststoff hat.

Die Herstellung der Zwischenspindel bzw. des Zwischenrohres aus Kunststoff führt darüber hinaus zu einer Gewichtsreduktion der Armatur. Des Weiteren lässt sie sich kostengünstiger herstellen, da Kunststoffbauteile kostengünstiger als Massenartikel hergestellt werden können als solche aus Metall. Des Weiteren besteht die Möglichkeit, durch angemessene Anpassung der Wandstärke der Zwischenspindel bzw. des Zwischenrohres eine gewisse radiale Dehnbarkeit einzustellen, die verhindert, dass auch im Falle eines Einfrierens der Armatur die frostbedingten Spannungen so groß werden, dass das Material der Auslaufarmatur versagt. Die Volumenänderung von Wasser in der Armatur beim Einfrieren wird vielmehr durch elastische Dehnung des oder der Kunststoffbauteile kompensiert. Dabei sollte die aus Kunststoff gebildete Zwischenspindel vorzugsweise eine Wandstärke haben, die klein im Verhältnis zu der Wandstärke des Zwischenrohres ist. Die Volumenänderung des frierenden Wassers führt dementsprechend zu einer elastischen Kompression der Zwischenspindel, die über ihre überwiegende Länge hohl sein sollte. Die Wandstärke der Zwischenspindel sollte vorzugsweise zwischen 20% und 60%, vorzugsweise zwischen 30% und 50% und besonders bevorzugt zwischen 40% und 50% der Wandstärke des Zwischenrohres betragen

Die Unteransprüche geben besondere Maßnahmen an, wie die aus Kunststoff gebildete Zwischenspindel bzw. das aus Kunststoff gebildete Zwischenrohr bestmöglich an das Ventilgehäuse bzw. das Auslaufgehäuse angeschlossen werden können. Die in den Ansprüchen 2 und 5 angegebenen Lösungen können auch für sich erfidungswesentlich sein.

Mit Blick auf die Einlassseite zum Anschluss an ein Leitungssystem bei einem aus Kunststoff hergestellten Zwischenrohr wird gemäß einer bevorzugten weiteren Ausführungsform der vorliegenden Erfindung vorgeschlagen, den Ventilsitz durch ein vorzugsweise aus Metall ausgebildetes Ventilsitzgehäuse auszuformen. Diese Lösung kann auch für sich erfidungswesentlich sein, d.h. eine Armatur mit den oberbegrifflichen Merkmalen von Anspruch 1 weiterbilden. Dabei ist das Ventilsitzgehäuse ist in axialer Richtung gegenüber dem vorzugsweise aus Kunststoff gebildeten Zwischenrohr fixiert. Hierzu hat das Ventilsitzgehäuse vorzugsweise an seiner Außenumfangsfläche einen Kragen, der zwischen einer durch das Zwischenrohr ausgebildeten Anlageschulter und Sicherungsmitteln aufgenommen und damit in axialer Richtung gegenüber dem Zwischenrohr fixiert ist, die mit dem Zwischenrohr verbunden sind. Dieses Ventilsitzgehäuse ist vorzugsweise aus Metall ausgeformt und dichtend in das Zwischenrohr eingesetzt. Hierzu weist das Ventilsitzgehäuse an seiner Außenumfangsfläche auf die Innenumfangsfläche des Zwischenrohres angepasst ausgeformte Dichtringe auf. Das Ventilsitzgehäuse überragt üblicherweise das Zwischenrohr in axialer Richtung und bildet einen Anschluss an das Rohrleitungssystem aus.

Gemäß einer bevorzugten Weiterbildung der vorliegenden Erfindung hat das Zwischenrohr eine endseitige Verbreiterung zur Aufnahme des Kragens, der an dem Ventilsitzgehäuse ausgeformt ist. Diese Verbreiterung weist an ihrer Außenumfangsfläche einen Sitz zur verdrehfesten Halterung des Befestigungskranzes auf. Der verdrehfeste Sitz kann beispielsweise durch eine Polygonalfläche ausgeformt sein, zu der korrespondierend eine auf die Verbreiterung aufgeschobene Bohrung des Befestigungskranzes passt. Der Sitz kann leicht konisch ausgeformt sein, so dass sich beim Aufschieben des Befestigungskranzes üblicherweise in Richtung auf das Einlaufende hin eine Verklemmung in axialer Richtung zwischen dem Zwischenrohr und dem Befestigungskranz ergibt. Ebenso gut kann eine Klebeverbindung verwendet werden, um den Befestigungskranz an dem Sitz zu befestigen.

Gemäß einer bevorzugten Weiterbildung der vorliegenden Erfindung ist die Verbreiterung mit einer nicht rotationssymmetrischen Innen-/oder Außenumfangsfläche ausgebildet. Eine polygonale Außenumfangsfläche eignet sich besonders gut für die verdrehfeste Halterung des Befestigungskranzes. Bei einer nicht rotationssymmetrischen, beispielsweise polygonalen, Innenumfangsfläche, wird das Ventilgehäuse am Außenumfang mit einer korrespondierend hierzu ausgeformten Außenumfangsfläche versehen, so dass das in das Kunststoffrohr eingebrachte Ventilsitzgehäuse verdrehfest in dem Zwischenrohr gehalten ist. Hierdurch wird es möglich, das Ventilsitzgehäuse beispielsweise mit einem Gewinde zu versehen, während das Ventilgehäuse beispielsweise über das Zwischenrohr oder den Befestigungskranz fixiert wird.

Gemäß einer bevorzugten Weiterbildung der vorliegenden Erfindung ist die Verbreiterung an ihrem inneren Ende, d. h., an demjenigen Ende der Verbreiterung, die zu dem Auslaufgehäuse gewandt ist, durch eine Anschlagschulter begrenzt. Gegen diese Anschlagschulter liegt der Kragen an. Die Sicherungsmittel sind durch wenigstens einen Stift gebildet, der in einer Bohrung der Verbreiterung aufgenommen ist. Damit befindet sich der Kragen zwischen der Axialschulter und dem Stift und ist damit in axialer Richtung fixiert. Die Bohrung zur Aufnahme des Stiftes erstreckt sich üblicherweise rechtwinkelig zu der Längserstreckung der Zwischenspindel bzw. des Zwischenrohres.

Weiterhin ist vorzugsweise bei einem aus Kunststoff gebildeten Zwischenrohr zur Montage des Auslaufgehäuses an dem Auslaufende des Zwischenrohres vorzugsweise ein Außengewinde vorgesehen, mit welchem eine Überwurfmutter im Gewindeeingriff ist. Die Überwurfmutter fixiert bei dieser für sich erfindungswesentlichen Ausgestaltung dichtend ein in das Zwischenrohr eingesetztes Anschlussstück in axialer Richtung gegenüber dem Zwischenrohr. Über das Anschlussstück ist die Auslaufarmatur mit dem Zwischenrohr verbunden. Bei dieser Verbindung handelt es sich zum Einen um eine Verbindung in axialer Richtung. Das Anschlussstück ist aber auch vorzugsweise verdrehsicher mittels Formschluss gegenüber dem Zwischenrohr fixiert, beispielsweise durch Anlage eines nicht rotationssymmetrischen Kragens an einer nicht rotationssymmetrisch ausgebildeten Stirnseite des Zwischenrohres. Auf solche Formschlussmittel kann indes verzichtet werden, wenn das Auslaufgehäuse beispielsweise über die Gebäueaußenwand verdrehsicher fixiert wird. Denn vorzugsweise wird das Auslaufende des Zwischenrohres genutzt für eine Längenanpassung des Zwischenrohres an unterschiedliche Wandstärken. Im Hinblick darauf sollte das stirnseitige Ende des Zwischenrohres und das stirnseitige Ende der Zwischenspindel möglichst einfach ausgestaltet sein und leicht mit den entsprechenden Anschlusspartnern, d. h., dem Auslaufgehäuse einerseits und der Stellspindel andererseits verbunden werden können.

Der dichtende Anschluss des Anschlussstücks an das Zwischenrohr erfolgt üblicherweise wie der Anschluss des Ventilsitzgehäuses an das Zwischenrohr durch einen oder mehreren auf den Umfang des in das Zwischenrohr eingeschobenen Anschlussstücks vorgesehene Dichtringe.

Gemäß einer bevorzugten Weiterbildung weist die Überwurfmutter ein zum Anschrauben einer Rosette vorgesehenes Außengewinde auf, wobei die Rosette an eine Gebäudeaußenwand anlegbar ist. Nach der Montage der Auslaufarmatur am Gebäude kann durch Verschrauben der Rosette über die Überwurfmutter die Rosette unter Überbrückung eines gegebenenfalls verbleibenden Spaltes, gegebenenfalls unter Zwischenlage einer Gummischeibe, gegen die Hauswand angelegt werden. Dabei kann die Rosette an ihrem anderen Ende mit dem Auslaufgehäuse zusammenwirken und dieses verdrehgesichert in vorbestimmter Ausrichtung in Umfangsrichtung zu fixieren, und zwar aufgrund einer Reibkraft, die sich zwischen der Rosette und der Gebäudeaußenwand ergibt.

Mit Blick auf eine einfache Fertigung des üblicherweise als Guss- oder Pressteil ausgeformten Auslaufgehäuses kann es zu bevorzugen sein, das Anschlussstück unter Vermittlung einer in dem Auslaufgehäuse befestigten Gewindehülse mit dem Auslaufgehäuse zu verbinden. Die Gewindehülse kann dabei in das Auslaufgehäuse eingeklebt sein. Die Gewindehülse erlaubt den Durchgang in axialer Richtung eines freien Endes der Stellspindel und befindet sich üblicherweise zwischen einem auslaufseitigen Endbereich des Anschlussstücks und einer Innenumfangsfläche des Auslaufgehäuses. Zwischen dem Anschlussstück und dem Auslaufgehäuse unmittelbar bzw. unter Vermittlung der Gewindehülse ist vorzugsweise eine Dichtung vorgesehen.

Zur einfachen Montage der Zwischenspindel an der Stellspindel wird gemäß einer bevorzugten Weiterbildung der vorliegenden Erfindung vorgeschlagen, dass die Stellspindel in die Zwischenspindel eingepresst ist. Hierbei wird in die üblicherweise als Hohlspindel ausgebildete Zwischenspindel ein Pressstutzen der Stellspindel eingepresst, welcher vorzugsweise an seiner Außenumfangsfläche radiale Verjüngungen in Form von Zähnen aufweist, die mit der Innenumfangsfläche der Hohlspindel verkrallen. Die Einbringtiefe der Stellspindel in die Zwischenspindel ist vorzugsweise dadurch vorbestimmt, dass die Stellspindel einen verbreiterten Spindelkopf aufweist, der stirnseitig gegen die Zwischenspindel anliegt.

Mit Rücksicht auf eine möglichst steife Ausgestaltung des Anschlussstücks, insbesondere zur Abstützung von Dichtringen zur Abdichtung des Anschlussstücks gegenüber dem Zwischenrohr, wird gemäß einer bevorzugten Weiterbildung der vorliegenden Erfindung vorgeschlagen, den Spindelkopf mit einer gezackten Querschnittsform auszubilden und das Anschlussstück hierzu korrespondierend an seiner Innenumfangsfläche ebenfalls mit einer gezackten Querschnittsform auszuformen, derart, dass der Spindelkopf in axialer Richtung durch das Anschlussstück hindurchschiebbar ist. Im montierten Zustand befindet sich das Anschlussstück in Strömungsrichtung hinter dem freien Ende der Stellspindel. Die gezackte Querschnittsform führt zu einer höheren radialen Steifigkeit des Anschlussstücks, erlaubt aber den Durchtritt des Spindelkopfes durch das Anschlussstück. Dem entsprechend kann das Auslaufgehäuse zusammen mit dem Anschlussstück und der Rosette vorgefertigt werden, wobei das Anschlussstück von der Einlaufseite her auf das Auslaufgehäuse aufgeschoben wird. Ein derart vorgefertigtes Auslaufgehäuse kann - nachdem die Länge von Zwischenrohr und Zwischenspindel auf die tatsächliche Dicke der zu überbrückenden Gebäudewand angepasst worden sind - durch Einpressen des Spindelkopfes in die Zwischenspindel gefügt werden. Das an dem Zwischenrohr ausgebildete Außengewinde, welches mit dem Innengewinde der Überwurfmutter zusammenwirkt, ist dabei so bemessen, dass beim Aufschrauben der Überwurfmutter der Spindelkopf in die hohle Zwischenspindel eingepresst wird. Die hierbei auf die Zwischenspindel ausgeübte axiale Kraft wird durch Anlage des Ventilkörpers an dem Ventilsitz widergelagert.

Die Zwischenspindel hat an ihrem einlaufseitigen Ende vorzugsweise eine Bohrung zur Aufnahme eines Rückflussverhinderer-Kegels. Dieser ist endseitig in der Zwischenspindel üblicherweise mit einer Druckfeder belastet, so dass eine an der gegenüberliegenden Seite des Rückflussverhinderungs-Kegels angeordnete Dichtung in Richtung auf den Ventilsitz auch in einer Offenstellung des Ventils unter Vorspannung anliegt und lediglich bei einem hinreichenden Systemdruck im Rohrleitungssystem den Strömungsdurchgang durch die Auslaufarmatur freigibt.

Zur Führung der Zwischenspindel an ihrem Einlaufende wird gemäß einer bevorzugten Weiterbildung der vorliegenden Erfindung vorgeschlagen, dass die Zwischenspindel an ihrem einlaufseitigen Ende auf dem Außenumfang verteilt angeordnete Führungsrippen aufweist. Auch diese Lösung kann für sich erfidungswesentlich sein, d.h. eine Armatur mit den oberbegrifflichen Merkmalen von Anspruch 1 weiterbilden. Vorzugsweise sind zwischen 3 und 8, besonders bevorzugt zwischen 4 und 6 solcher Führungsrippen auf dem Umfang verteilt angeordnet. Die Führungsrippen wirken mit der Innenumfangsfläche des Zwischenrohres zusammen und bewirken dem entsprechend eine radiale Abstützung und Zentrierung der Zwischenspindel an ihrem Einlaufende. Die Führungsrippen sind vorzugsweise flexibel ausgebildet, und zwar besonders bevorzugt dadurch, dass die Führungsrippen zu der Innenumfangsfläche des Zwischenrohres hin spitz zulaufend ausgebildet sind. Dabei sind die Führungsrippen üblicherweise einteilig und stoffidentisch mit der Zwischenspindel ausgeformt. Die Zwischenspindel ist aus einem relativ festen Kunststoff, beispielsweise Polyethylen, hergestellt. Die Flexibilität der Führungsrippen ergibt sich insbesondere aufgrund der geometrischen Ausgestaltung und der Materialbeschaffenheit des Kunststoffs. Die Führungsrippen sind vorzugsweise relativ zu dem Innendurchmesser des Führungsrohres mit leichtem Übermaß hergestellt, so dass sämtliche Führungsrippen sich am Innenumfang des Zwischenrohres abstützen und somit die Zwischenspindel sicher zentrieren. Die spitz zulaufenden Führungsrippen können eine eventuelle Presspassung durch Verformung ihrer spitzen Enden kompensieren, so dass sich keine Verklemmung der Zwischenspindel in dem Zwischenrohr ergibt.

Die Führungsrippen erstrecken sich üblicherweise nur über eine relativ kurze axiale Länge entlang der Zwischenspindel. Der erhebliche Teil der axialen Länge der Zwischenspindel, üblicherweise bis zu dem Auslaufende der Zwischenspindel, ist mit auf dem Außenumfang verteilt angeordneten Stützrippen versehen, die mit der Innenumfangsfläche des Zwischenrohrs zusammenwirken. Auch diese Lösung kann für sich erfidungswesentlich sein, d.h. eine Armatur mit den oberbegrifflichen Merkmalen von Anspruch 1 weiterbilden. Die Stützrippen dienen dabei insbesondere der Versteifung des relativ dünnen Wandungsquerschnitts der Stellspindel einerseits und verhindern eine Durchbiegung der Stellspindel dadurch, dass die Stützrippen an der Innenumfangsfläche des Zwischenrohres anliegen. Es sind vorzugsweise zwischen 3 und 8, besonders bevorzugt zwischen 4 und 6 Stützrippen auf dem Umfang der Zwischenspindel verteilt angeordnet. Die Stützrippen sind vorzugsweise mit Rücksicht auf den Innendurchmesser des Zwischenrohres mit Spiel ausgelegt. Der Durchmesser einer die stirnseitigen Enden der Stützrippen enthaltenen Hüllfläche ist dementsprechend geringfügig kleiner als der Innendurchmesser des Zwischenrohres. Die Stützrippen sollen üblicherweise lediglich dann mit dem Innenumfang des Zwischenrohres zusammenwirken, wenn die Zwischenspindel aufgrund mechanischer Belastung eine exzentrische Verformung zeigt, insbesondere zu knicken droht.

Die Stützrippen erstrecken sich in axialer Richtung üblicherweise einlaufseitig bis in einen Bereich, in welchem die Zwischenspindel als Vollmaterial ausgebildet und mit einer Bohrung für den Rückflussverhinderer-Kegel versehen ist. Die Führungsrippen befinden sich den Stützrippen in axialer Richtung vorgelagert und beabstandet hierzu durch einen kurzen, üblicherweise rippenfreien Längenbereich der Zwischenspindel. Die Führungsrippen haben dabei eine Länge von zwischen 4% und 14% der Gesamtlänge der Zwischenspindel; die Führungsrippen haben eine Länge von 87% bis 94% der Gesamtlänge der Zwischenspindel. Ein zwischen den Führungsrippen und den Stützrippen vorgesehener rippenfreier Bereich hat vorzugsweise eine Länge von zwischen 1% und 3% der Gesamtlänge der Zwischenspindel.

Die Stützrippen sind besonders bevorzugt in radialer Richtung in etwa mit konstanter Dicke ausgebildet.

Weitere Einzelheiten und Vorteile der vorliegenden Erfindung ergeben sich aus den nachfolgenden Ausführungsbeispielen in Verbindung mit der Zeichnung. In dieser Zeichnung ist
- Fig. 1: eine Längsschnittansicht des Ausführungsbeispiels;
- Fig. 2: eine Querschnittansicht entlang der Linie II - II gemäß der Darstellung in Figur 1;
- Fig. 3: eine Querschnittsansicht entlang der Linie III - III gemäß Fig. 1;
- Fig. 4: eine Querschnittsansicht entlang der Linie IV - IV gemäß Fig. 1 und
- Fig. 5: eine Querschnittsansicht entlang der Linie V - V gemäß Fig. 1.

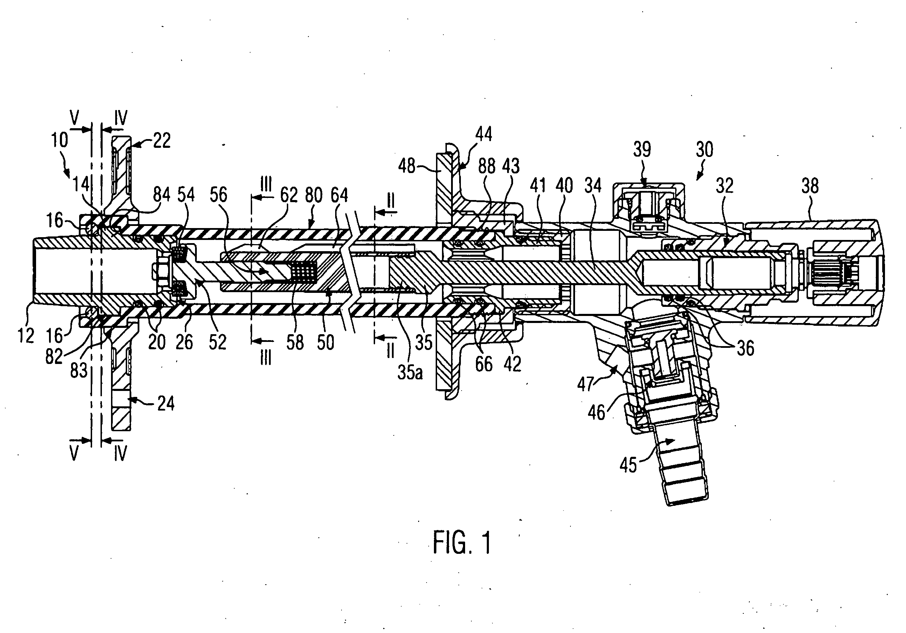

Die Figur 1 zeigt eine frostsichere Auslaufarmatur mit einem Ventilgehäuse 10, einem Auslaufgehäuse 30 und einer zwischen beiden Gehäusen 10, 30 angeordneten Zwischenspindel 50.

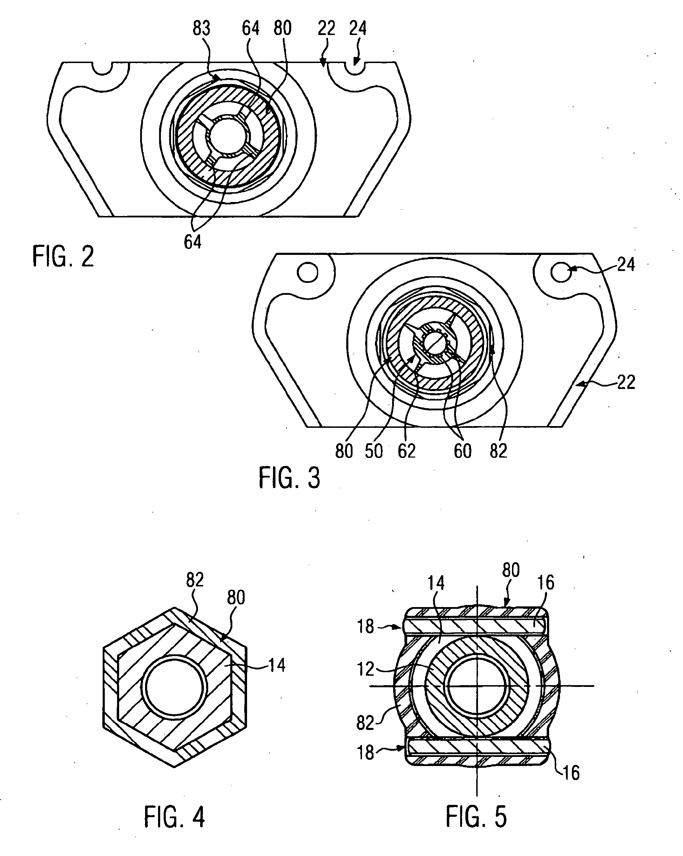

Das Ventilgehäuse 10 umfasst ein metallisches Ventilsitzgehäuse 12, welches im Wesentlichen zylindrisch ausgeformt ist und an seinem Außenumfang durch einen Kragen 14 mit polygonaler Querschnittsform überragt ist. Das Ventilsitzgehäuse 12 ist in dem Einlaufende eines Zwischenrohres 80 axial fixiert. Hierzu formt das Zwischenrohr 80, welches eine Zwischenspindel 50 umgibt, einteilig eine Verbreiterung 82 mit polygonaler Querschnittsform entsprechend der Querschnittsform des Kragens 14 (vgl. Fig. 4) aus. Die Verbreiterung 82 bildet an ihrem inneren Ende eine Axialschulter 84 aus, gegen welche der Kragen 14 anliegt. Auf seiner vorderen Stirnseite ist der Kragen 14 durch Sicherungsmittel in Form von zwei Stiften 16 in axialer Richtung fixiert, die in sich quer zur Längsachse des Zwischenrohres 80 erstreckenden Querbohrung 18 aufgenommen sind (vgl. Fig. 5). Das in dieser Weise axial fixierte Ventilsitzgehäuse 12 ist über zwei O-Ringe 20, die in am inneren Ende an dem Außenumfang des Ventilsitzgehäuses 12 ausgesparten Nuten eingesetzt sind, gegenüber dem Zwischenrohr 80 abgedichtet.

Auf die polygonale Außenumfangsfläche der Verbreiterung 82 bildet einen Sitz 83 für einen Befestigungskranz 22 mit polygonaler Bohrung aufgeschoben. Der Befestigungskranz 22, das Zwischenrohr 80 sowie das Ventilsitzgehäuse 12 sind dem entsprechend verdrehfest miteinander fixiert und an eine Gebäudewand fixierbar. Der Befestigungskranz 22 hat zur Montage an der Gebäudewand mehrere auf dem Umfang verteilt vorgesehene Befestigungsbohrungen 24.

Das in Ventilsitzgehäuse 12 bildet einen Ventilsitz 26 für die Anlage ein Ventilkegel 52 mit Rückflussverhinderer aus. Der Ventilkegel 52 trägt an seinem einlaufseitigen Ende eine Dichtung 54 und ist an seinem gegenüberliegenden Ende stabförmig ausgebildet und in einer Führungsbohrung 56 der Zwischenspindel 50 unter Zwischenlagerung einer endseitig vorgesehenen Druckfeder 58 aufgenommen. Der Ventilkegel 52 weist auf dem Außenumfang verteilt vorgesehene Vorsprünge auf, die mit korrespondierend hierzu vorgesehenen Verdrehsicherungsnuten 60 zur verdrehgesicherten Lagerung des Ventilkegels 52 an der Zwischenspindel 50 vorgesehen sind (vgl. Fig. 2). Die Zwischenspindel 50 weist ferner im Bereich des Ventilkegels 52 vier auf dem Umfang verteilte Führungsrippen 62 auf, die sich an der Innenumfangsfläche des Zwischenrohres 80 abstützen und zu dieser Innenumfangsfläche hin spitz zulaufend ausgeformt sind. Für die Ausbildung der Führungsbohrung 56 ist die Zwischenspindel 50 zunächst im Bereich des Einlaufendes als Vollmaterial ausgeformt. Der überwiegende Teil der Zwischenspindel 50, der sich zu dem Auslaufende hin erstreckt, ist indes dünnwandig ausgeformt und, wie Fig. 3 belegt und mit vier auf dem Umfang verteilt vorgesehenen Stützrippen 64 versteift, die in radialer Richtung mit konstanter Dicke ausgebildet und dem entsprechend verhältnismäßig steif sind. Durch diese Stützrippen 64 wird die Biegesteifigkeit der Zwischenspindel 50 über einen erheblichen Teil ihrer Länge erhöht und die Zwischenspindel 50 in dem Zwischenrohr 80 zentriert.

Das Auslaufgehäuse 30 entspricht im Wesentlichen der bereits aus der DE 200 01 883 U bekannten Ausgestaltung und weist ein Ventiloberteil 32 auf, in welchem eine Stellspindel 34 über O-Ringe 36 abgedichtet und in Längsrichtung durch Betätigen eines Drehgriffs 38 verstellbar gehalten ist, die an ihrem freien Ende einen verbreiterten Spindelkopf 35 aufweist. Das Auslaufgehäuse 30 weist in an sich bekannter Weise einen über die Druckdifferenz zwischen dem Atmosphärendruck und dem Innendruck in dem Auslaufgehäuse betätigten Belüfter 39 auf (vgl. DE 200 01 883 U1). An dem Einlaufende ist in das Auslaufgehäuse 30 eine Gewindehülse 40 dichtend eingeklebt. Stattdessen kann selbstverständlich auch in ein metallisches Gehäuseelement des Auslaufgehäuses 30 ein Innengewinde ausgebildet sein. In die Gewindehülse 40 ist ein Anschlussstück 41 dichtend eingeschraubt, dessen einlaufseitiges Ende über O-Ringe 66 dichtend in das Zwischenrohr 80 eingesetzt ist. Das Anschlussstück 41 stützt sich über eine von einem Flansch 42 gebildete Ringfläche an dem stirnseitigen Ende des Zwischenrohres 80 ab. Dieser Flansch 42 ist außenseitig übergriffen von einer Überwurfmutter 43, die mit einem an dem Zwischenrohr 80 endseitig ausgebildeten Außengewinde 88 im Gewindeeingriff ist und an ihrem einlaufseitigen Ende mit einem Außengewinde versehen ist, welches mit einem Innengewinde einer Rosette 44 im Gewindeeingriff ist. Durch die Überwurfmutter 43 wird das Auslaufgehäuse 30 in axialer Richtung relativ zu dem Zwischenrohr 80 fixiert.

Auf Höhe der O-Ringe 66 ist das Anschlussstück 41 in radialer Richtung nach innen hin verbreitert und zwar durch eine sternförmige Ausgestaltung an der Innenumfangsfläche, welche angepasst ausgebildet ist zu dem verbreiterten Spindelkopf 35 der Stellspindel 34, der ebenfalls stern- bzw. zackenförmig ausgebildet ist, so dass der verbreiterte Spindelkopf 35 durch das Anschlussstück 41 in axialer Richtung hindurchgeschoben werden kann.

Der verbreiterte Spindelkopf 35 liegt mit einer Ringfläche gegen das auslaufseitige Ende des Zwischenrohres 80 an, welche von einem Passzylinder 35a des Spindelkopfes 35 überragt wird, der an seiner Außenumfangsfläche zahnförmige Vorsprünge aufweist. Über diese zahnförmigen Vorsprünge ist die Stellspindel 34 in die Zwischenspindel 50 eingepresst und hiermit verbunden.

Zur Vervollständigung der speziellen Beschreibung zu dem Auslaufgehäuse 30 sei darauf hingewiesen, dass von diesem eine Schlauchverschraubung 45 zum Anschluss eines Wasserschlauches abragt, welcher unter Zwischenlage eines Rückflussverhinderers 46 in das metallisches Gehäuseteil des Auslaufgehäuses 30 eingeschraubt ist, welches zwischen der Schlauchverschraubung 45 und dem Rückflussverhinderer 46 mit einer Rückflussauslaufbohrung 47 versehen ist.

Zur Montage wird das in den zuvor diskutierten Figuren beschriebene Ausführungsbeispiel üblicherweise mit seinem Ventilgehäuse 10 über den Befestigungskranz 22 im Bereich der Gebäudeinnenwand befestigt. Zuvor sind das Zwischenrohr 80 und die Zwischenspindel 50 abgelängt worden, derart, dass nach erfolgter Montage die Rosette 44 unter Zwischenlage einer Gummischeibe 48 an der Gebäudeaußenwand anliegt. Nach dem Ablängen bleibt das freie Ende der Zwischenspindel 50 unbearbeitet, wohingegen an dem abgelängten Ende des Zwischenrohres 80 das Außengewinde 88 für die Überwurfmutter 43 ausgeformt wird.

Mit in solcher Weise an dem Gebäude vorpositionierten Ventilgehäuse 10 mit Zwischenrohr 80 wird das vormontierte Auslaufgehäuse 30, bei welchem bereits der Spindelkopf 35 durch das Anschlussstück 41 hindurchgeschoben ist, montiert. Hierzu wird zunächst die Zwischenspindel 50 in das Zwischenrohr 80 eingeschoben. Insbesondere die Stützrippen 64 zentrieren dabei die Zwischenspindel 50 in dem Zwischenrohr 80. Danach wird das vormontierte Auslaufgehäuse 30 in das Zwischenrohr 80 eingeschoben, so dass die an dem Anschlussstück 41 ausgesparten O-Ringe 66 dichtend an die Innenumfangsfläche des Zwischenrohres 80 angelegt werden. Sobald der Passzylinder 35a, der stirnseitig leicht konisch ausgebildet ist, in die hohlzylindrische Zwischenspindel 50 eindringt, ergibt sich ein erheblicher Widerstand gegen eine zunehmende Einbringbewegung des Auslaufgehäuses. Nunmehr wird die Überwurfmutter 43 in Eingriff mit dem Außengewinde 88 des Zwischenrohres 80 gebracht. Über Funktionsflächen an der Überwurfmutter 43 wird diese mit dem Zwischenrohr 80 verschraubt und hierbei das Auslaufgehäuse 30 in axialer Richtung vorgetrieben, so dass der Passzylinder 35a in die Zwischenspindel 50 eingepresst wird. Dabei wird der Ventilkegel 52 unter Zwischenlage der Dichtung 54 an dem Ventilsitz 26 einerseits und gegen das stirnseitige Ende der Führungsbohrung 56 andererseits abgestützt, wodurch die Zwischenspindel 50 in axialer Richtung widergelagert wird. Im montierten Zustand überragt jedenfalls der Spindelkopf 35 das Anschlussstück 42 in Richtung auf das Einlaufende der Auslaufarmatur.

Nachdem auf diese Weise das Auslaufgehäuse 30 montiert worden ist, wird die Rosette 44 auf das Anschlussstück 41 aufgeschraubt und so gegen die Gebäudeaußenwand unter Zwischenlage der Gummischeibe 48 angelegt.

### Bezugszeichenliste

- 10: Ventilgehäuse
- 12: Ventilsitzgehäuse
- 14: Kragen
- 16: Stift
- 18: Querbohrung
- 20: O-Ring
- 22: Befestigungskranz
- 24: Befestigungsbohrung
- 26: Ventilsitz
- 30: Auslaufgehäuse
- 32: Ventiloberteil
- 34: Stellspindel
- 35: Spindelkopf
- 35a: Presszylinder
- 36: O-Ring
- 38: Drehgriff
- 39: Belüfter
- 40: Gewindehülse
- 41: Anschlussstück
- 42: Flansch
- 43: Überwurfmutter
- 44: Rosette
- 45: Schlauchverschraubung
- 46: Rückflussverhinderer
- 47: Rückflussauslaufbohrung
- 48: Gummischeibe
- 50: Zwischenspindel
- 52: Ventilkegel
- 54: Dichtung
- 56: Führungsbohrung
- 58: Druckfeder
- 60: Verdrehsicherungsnuten
- 62: Führungsrippen
- 64: Stützrippen
- 66: O-Ring
- 80: Zwischenrohr
- 82: Verbreiterung
- 83: Sitz
- 84: Axialschulter
- 86: Bohrung
- 88: Außengewinde

## Patentansprüche

1. Frostsichere Auslaufarmatur mit
einem Ventilgehäuse (10), welches einen Ventilsitz (26) ausbildet,
einem Auslaufgehäuse (30) und
einer Zwischenspindel (50), die in einem Zwischenrohr (80) aufgenommen ist, welches das Auslaufgehäuse (30) mit dem Ventilgehäuse (10) verbindet,
**dadurch gekennzeichnet,**
**dass** die Zwischenspindel (50) aus Kunststoff gebildet ist.

2. Frostsichere Auslaufarmatur nach einem der vorherigen Ansprüche, **dadurch gekennzeichnet, dass** eine axial bewegliche Stellspindel (34) in die Zwischenspindel (50) eingepresst ist.

3. Frostsichere Auslaufarmatur nach einem der vorherigen Ansprüche, **dadurch gekennzeichnet, dass** die Stellspindel (34) einen verbreiterten Spindelkopf (35) aufweist, der stirnseitig gegen die Zwischenspindel (50) anliegt.

4. Frostsichere Auslaufarmatur nach Anspruch 3, **dadurch gekennzeichnet, dass** der verbreiterte Spindelkopf (35) eine gezackte Querschnittsform hat und dass das Anschlussstück (34) eine hierzu korrespondierend ausgebildete gezackte Innenumfangsfläche aufweist, derart, dass der verbreiterte Spindelkopf (35) in axialer Richtung durch das Anschlussstück (41) hindurchführbar ist.

5. Frostsichere Auslaufarmatur nach einem der vorherigen Ansprüche, **dadurch gekennzeichnet, dass** die Zwischenspindel (50) an ihrem einlaufseitigen Ende auf dem Außenumfang verteilt angeordnete Führungsrippen (62) aufweist, die mit der Innenumfangsfläche des Zwischenrohrs (80) zusammenwirken.

6. Frostsichere Auslaufarmatur nach Anspruch 5, **dadurch gekennzeichnet, dass** die Führungsrippen (62) spitz zulaufend ausgebildet sind.

7. Frostsichere Auslaufarmatur nach einem der vorherigen Ansprüche, **dadurch gekennzeichnet, dass** die Zwischenspindel (50) über einen erheblichen Teil ihrer Länge auf dem Außenumfang verteilt angeordnete Stützrippen (64) aufweist, die mit der Innenumfangsfläche des Zwischenrohrs (50) zusammenwirken.

8. Frostsichere Auslaufarmatur nach Anspruch 7, **dadurch gekennzeichnet, dass** die Stützrippen (64) in radialer Richtung in etwa eine konstante Dicke haben und dass das Zwischenrohr (80) aus Kunststoff gebildet ist und dass die Wandstärke der Zwischenspindel klein im Verhältnis zu der Wandstärke des Zwischenrohres (80) ist.

## Claims

1. Frost-proof outlet fitting having
a valve body (10) which forms a valve seat (26), an outlet housing (30) and
an intermediate spindle (50) which is accommodated in an intermediate pipe (80) that connects the outlet housing (30) to the valve body (10),
**characterized**
**in that** the intermediate spindle (50) is formed from plastics material.

2. Frost-proof outlet fitting according to one of the preceding claims, **characterized in that** an axially movable adjusting spindle (34) has been pressed into the intermediate spindle (50).

3. Frost-proof outlet fitting according to either of the preceding claims, **characterized in that** the adjusting spindle (34) has an enlarged spindle head (35), the end side of which bears against the intermediate spindle (50).

4. Frost-proof outlet fitting according to Claim 3, **characterized in that** the enlarged spindle head (35) has a serrated cross-sectional shape, and **in that** the connection piece (34) has a serrated internal circumferential surface formed in a manner corresponding thereto, such that the enlarged spindle head (35) is able to be passed through the connection piece (41) in the axial direction.

5. Frost-proof outlet fitting according to one of the preceding claims, **characterized in that** the intermediate spindle (50) has guide ribs (62) that are arranged in a manner distributed around the external circumference at the inlet-side end of said intermediate spindle (50), said guide ribs (62) cooperating with the internal circumferential surface of the intermediate pipe (80).

6. Frost-proof outlet fitting according to Claim 5, **characterized in that** the guide ribs (62) are configured in a tapered manner.

7. Frost-proof outlet fitting according to one of the preceding claims, **characterized in that** the intermediate spindle (50) has supporting ribs (64) that are arranged in a manner distributed around the external circumference along a considerable part of the length of said intermediate spindle (50), said supporting ribs (64) cooperating with the internal circumferential surface of the intermediate pipe (50).

8. Frost-proof outlet fitting according to Claim 7, **characterized in that** the supporting ribs (64) have a more or less constant thickness in the radial direction, and **in that** the intermediate pipe (80) is formed from plastics material, and **in that** the wall thickness of the intermediate spindle is small compared with the wall thickness of the intermediate pipe (80).

## Revendications

1. Robinetterie d'écoulement ou de puisage antigel, comprenant
un corps de soupape (10), qui forme un siège de soupape (26),
un corps de sortie d'écoulement (30), et
une broche intermédiaire (50), qui est logée dans un tube intermédiaire (80) reliant le corps de sortie d'écoulement (30) au corps de soupape (10),
**caractérisée**
**en ce que** la broche intermédiaire (50) est réalisée en matière plastique.

2. Robinetterie d'écoulement antigel selon l'une des revendications précédentes, **caractérisée en ce qu'**une broche de manoeuvre ou de réglage (34) mobile axialement, est montée à force dans la broche intermédiaire (50).

3. Robinetterie d'écoulement antigel selon l'une des revendications précédentes, **caractérisée en ce que** la broche de réglage (34) présente une tête de broche élargie (35), qui s'appuie frontalement contre la broche intermédiaire (50).

4. Robinetterie d'écoulement antigel selon la revendication 3, **caractérisée en ce que** la tête de broche élargie (35) possède une forme de section transversale dentelée, et **en ce que** la pièce de raccordement (34) présente une surface périphérique intérieure dentelée de configuration correspondante, de façon à ce que la tête de broche élargie (35) puisse traverser dans la direction axiale la pièce de raccordement (41).

5. Robinetterie d'écoulement antigel selon l'une des revendications précédentes, **caractérisée en ce que** la broche intermédiaire (50) présente, à son extrémité du côté de l'entrée d'écoulement, des nervures de guidage (62) agencées de manière répartie sur la périphérie extérieure et coopérant avec la surface périphérique intérieure du tube intermédiaire (80).

6. Robinetterie d'écoulement antigel selon la revendication 5, **caractérisée en ce que** les nervures de guidage (62) se rétrécissent en pointe.

7. Robinetterie d'écoulement antigel selon l'une des revendications précédentes, **caractérisé en ce que** la broche intermédiaire (50) présente, sur une partie considérable de sa longueur, des nervures d'appui (64) agencées de manière répartie sur la périphérie extérieure, et coopérant avec la surface périphérique intérieure du tube intermédiaire (50).

8. Robinetterie d'écoulement antigel selon la revendication 7, **caractérisé en ce que** les nervures d'appui (64) ont sensiblement une épaisseur constante dans la direction radiale, et **en ce que** le tube intermédiaire (80) est réalisé en matière plastique, et **en ce que** l'épaisseur de paroi de la broche intermédiaire est faible par rapport à l'épaisseur de paroi du tube intermédiaire (80).
